# EUROPEAN PATENT SPECIFICATION

(11) **EP 3 647 195 B1**
(45) Date of publication and mention of the grant of the patent: **05.03.2025**
(21) Application number: 18203592.3
(22) Date of filing: 31.10.2018
(51) Int. Cl.: B64D 11/06

(54) **AISLE ACCESS SIDE FACING SEAT**
DER GANGREIHENZUGANGSSEITE ZUGEWANDTER SITZ
SIÈGE TOURNÉ VERS L'ACCÈS À L'ALLÉE

(43) Date of publication of application: 06.05.2020
(73) Proprietor: Safran Seats USA LLC, Gainesville, TX 76240 (US)
(72) Inventor: BENTLEY, Paul, Gainesville, Texas 76240 (US); GREEN, Jeremy, Gainesville, Texas 76240 (US); GASTON, Joe, Gainesville, Texas 76240 (US)
(74) Representative: Marconnet, Sébastien

(56) References cited:
- EP-B1- 1 314 643
- WO-A1-2007/128978
- WO-A1-2014/049362
- WO-A1-2018/078374
- WO-A1-2018/187071
- FR-A- 1 311 972
- US-A- 5 636 898
- US-A1- 2018 273 185

## Description

### FIELD OF THE INVENTION

This application relates to passenger seats, and more particularly to passenger seats for narrow-body aircraft that are side-facing, non-flat seats with aisle access.

### BACKGROUND

Some passenger vehicles, such as aircraft, buses, trains, ships, and automobiles, are single-aisle vehicles in which passenger seats are arranged along a single aisle. For example, a narrow-body aircraft (or single-aisle aircraft) is an airliner with passenger seats arranged along a single aisle and typically up to six-abreast seating due to the diameter of the fuselage. In contrast, a wide-body aircraft is a larger airliner usually configured with multiple aisles due to a larger diameter of the fuselage. While multiple-aisle vehicles are able to provide more passenger seats with aisle access, such vehicles are often too large, costly, or otherwise impractical to use in certain settings (e.g., for short haul flights). On the other hand, providing an increased number of traditional passenger seats with aisle access on a single-aisle vehicle may significantly decrease the seating capacity of the single-aisle vehicle and/or negatively impact the spacing of the aisle. Therefore, there is a need for passenger seats for single-aisle vehicles (such as narrow-body aircraft) that provide direct aisle access.

Document US5636898 describes a reclining seat having a seat back which reclines and a seat bottom which elevates, the improvement which comprises linkage means interconnecting the seat back and the seat bottom and providing a ratio of seat back movement to seat bottom movement of greater than 1 to 1.

Document WO2018187071 describes a seating assembly for a passenger aircraft including a plurality of passenger seats comprising a first passenger seat and a second passenger seat. Each of the passenger seats includes an articulated seat pan to provide for moving the passenger seat between a first upright position and a second reclined position.

### SUMMARY

Embodiments of the invention covered by this patent are defined by the claims below, not this summary. This summary is a high-level overview of various embodiments of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The invention is set out in the appended set of claims.

According to the claimed invention, a passenger seat arrangement according to claim 1 is provided.

In some examples, the first seat plane and the second seat plane are each at the non-square and non-zero angle in the aft direction such that a front surface of the first seat back is aft-facing and a front surface of the second seat back is aft-facing. In some cases, the first seat plane and the second seat plane are each at the non-square and no-zero angle in the forward direction such that a front surface of the first seat back is forward-facing and a front surface of the second seat back is forward-facing. According to various examples, the angle between the first seat plane and the aisle plane is greater than 0 degrees and less than 90 degrees. In some aspects, the angle is 20 degrees.

According to certain cases, the angle between the first seat plane and the aisle plane is a mirrored angle of the angle between the second seat plane and the aisle plane. In some examples, the first passenger seat and the second passenger seat each have direct access to the aisle.

In various cases, the passenger seat arrangement further includes a third passenger seat aft of the first passenger seat and including a third seat base, a third seat back, and a third seat plane. In some examples the third passenger seat is a non-lie flat passenger seat moveable between an upright position and a neutral position, and the third seat back is at a non-zero angle relative to the third seat base in both the upright position and the neutral position. In certain examples, the passenger seat arrangement further includes a fourth passenger seat aft of the second passenger seat and including a fourth seat base, a fourth seat back, and a fourth seat plane. In various aspects, the fourth passenger seat is a non-lie flat passenger seat moveable between an upright position and a neutral position, and the fourth seat back is at a non-zero angle relative to the fourth seat base in both the upright position and the neutral position. In various aspects, the aisle is defined between the third passenger seat and the fourth passenger seat, the third seat plane is at a non-square and non-zero angle relative to the aisle plane, the fourth seat plane is at a non-zero and non-zero angle relative to the aisle plane, and the first passenger seat, second passenger seat, third passenger seat, and fourth passenger seat each have direct access to the aisle.

According to the claimed invention, a method of installing a passenger seat arrangement according to claim 5 is provided.

In some aspects, positioning the first passenger seat and the second passenger seat includes angling the first seat plane and the second seat plane at the non-square and non-zero angle in the aft direction such that a front surface of the first seat back is aft-facing and a front surface of the second seat back is aft-facing. In various cases, positioning the first passenger seat and the second passenger seat includes angling the first seat plane and the second seat plane at the non-square and non-zero angle in the forward direction such that a front surface of the first seat back is forward-facing and a front surface of the second seat back is forward-facing.

In some examples, positioning the first passenger seat and the second passenger seat includes angling the first passenger seat and the second passenger seat such that the angle between the first seat plane and the aisle plane is a mirrored angle of the angle between the second seat plane and the aisle plane. In various examples, positioning the first passenger seat includes angling the first passenger seat such that the angle between the first seat plane and the aisle plane is 20 degrees.

### BRIEF DESCRIPTION OF THE DRAWINGS

The features and components of the following figures are illustrated to emphasize the general principles of the present disclosure. Corresponding features and components throughout the figures can be designated by matching reference characters for the sake of consistency and clarity.
FIG. 1 is a perspective view of a passenger seat arrangement in a narrow-body aircraft according to aspects of the current disclosure.
FIG. 2 is a perspective view of a row passenger seat assemblies of the passenger seat arrangement of FIG. 1.
FIG. 3 is a plan view of a passenger seat arrangement in a narrow-body aircraft according to aspects of the current disclosure.
FIG. 4 is a plan view of three passenger seat assemblies of the passenger seat arrangement of FIG. 3.
FIG. 5 is a plan view of a passenger seat arrangement in a narrow-body aircraft according to aspects of the current disclosure.
FIG. 6 is a perspective view of a portion of a passenger seat arrangement in a narrow-body aircraft according to an example not part of the claimed invention.
FIG. 7 is a plan view of the passenger seat arrangement of FIG. 6 with the passenger seat assemblies in an upright position according to an example not part of the claimed invention.
FIG. 8 is a plan view of the passenger seat arrangement of FIG. 7 with the passenger seat assemblies in a neutral position according to an example not part of the claimed invention.
FIG. 9 is a perspective view of two passenger seat assemblies of a passenger seat arrangement in a narrow-body aircraft according to an example not part of the claimed invention.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described. Directional references such as "forward," "aft," "up," "down," "top," "left," "right," "front," and "back," among others are intended to refer to the orientation as illustrated and described in the figure (or figures) to which the components and directions are referencing.

In one aspect, disclosed are a passenger seat and passenger seat arrangements for single-aisle vehicles such as narrow-body aircraft, and associated methods, systems, devices, and various apparatus. The passenger seat is angled relative to a longitudinal plane of the aircraft, provides direct access to the aisle, and is a non-lie flat seat. It would be understood by one of skill in the art that the disclosed passenger seat and passenger seat arrangement are described in but a few exemplary aspects among many.

In some examples, the passenger seat includes a seat plane, and the passenger seat is angled relative to a longitudinal plane of the vehicle extending in the forward and aft direction such that the seat plane is at a non-zero and non-square angle relative to the longitudinal plane. The passenger seat may be angled in the forward direction or in the aft direction. The passenger seat provides direct access to the aisle of the single-aisle vehicle. The passenger seat is a non-lie flat seat, meaning that a seat back does not recline relative to a seat base of the passenger seat to form a flat surface. The passenger seat is movable between an upright position (also known as a taxiing, take-off, and landing (TTL) position) and a neutral or zero gravity position (also known as a perfect posture position). In both the upright position and the neutral position, the seat back is at a non-zero angle relative to the seat base.

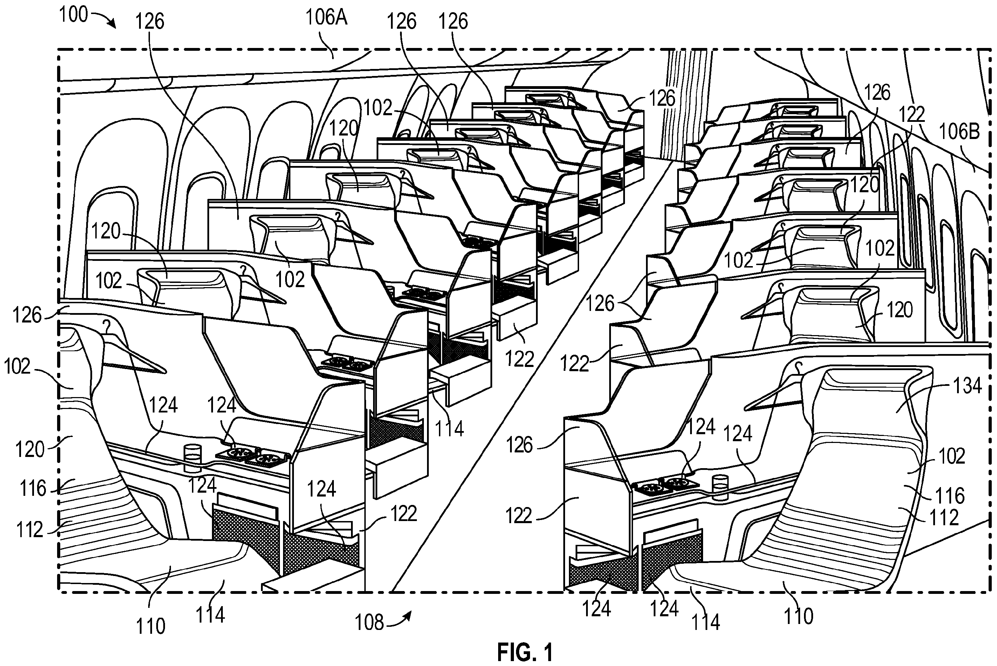

FIGs. 1-2 illustrate an example of a passenger seat arrangement 100 having a plurality of passenger seat assemblies 102. The passenger seat arrangement 100 is provided in a narrow-body aircraft 104 having opposing side walls 106A-B and a single aisle 108. The narrow-body aircraft 104 includes a longitudinal direction extending forward and aft. As described in detail below, the aisle 108 has a central aisle plane extending in the longitudinal direction, and each passenger seat assembly has a central seat plane that is angled at a non-square and non-zero angle relative to the central aisle plane. While the narrow-body aircraft 104 is disclosed, it will be appreciated that the passenger seat arrangement 100 may be provided in various other single-aisle vehicles.

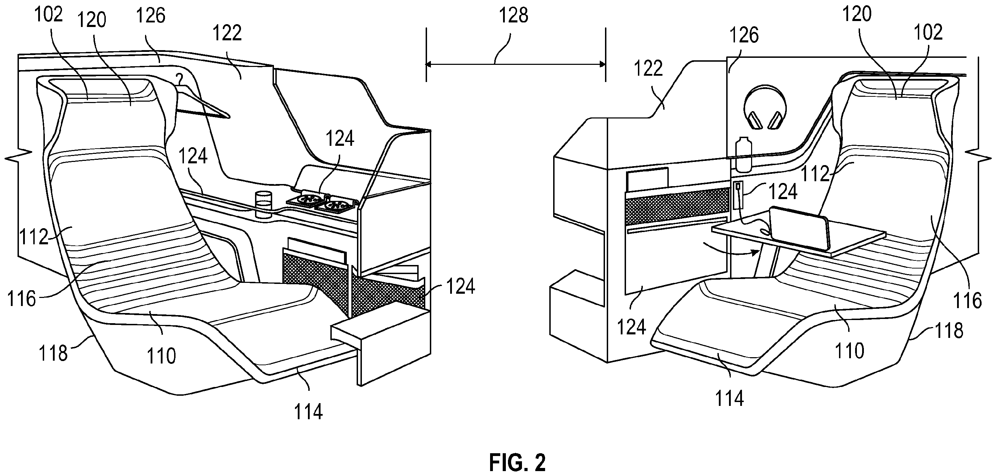

In various examples, the passenger seat assemblies 102 are arranged in rows. In various examples, the aisle 108 is defined between adjacent seat assemblies 102 in a row, and an aisle width 128 (see FIG. 2) is the distance between the adjacent seat assemblies 102. Each seat assembly 102 has direct access to the aisle 108 because the seat assemblies 102 are angled relative to the aisle plane and is movable between an upright and neutral position as described below. As used herein, direct aisle access means that a passenger sitting in one of the seat assemblies 102 need not climb over or past another seat assembly 102 to access the aisle 108.

As illustrated in FIGs. 1 and 2, each passenger seat assembly 102 includes a seat base 110 and a backrest 112. Optionally, the seat base 110 includes a leg rest 114, although it need not. When included with the seat base 110, the shape of the leg rest 114 should not be considered limiting on the current disclosure. The backrest 112 includes a forward side 116 and an aft side 118 (see FIG. 2) opposite the forward side 116. When used by a passenger, the forward side 116 is a side against which the passenger may rest his or her back, and the aft side 118 generally faces away from the passenger when used. As described in detail below, in the passenger seat arrangement 100, each passenger seat assembly 102 may be angled such that the forward side 116 faces the forward direction of the narrow-body aircraft 104 or the aft direction of the narrow-body aircraft 104, and is inboard-facing (i.e., facing the aisle 108) or, in examples not falling within the scope of the claims, may be outboard-facing (i.e., facing the corresponding adjacent wall 106A-B). The passenger seat assemblies 102 all faces a similar direction (e.g., all inboard-facing in the forward direction). In other examples not falling within the scope of the claims, some of the passenger seat assemblies 102 of the passenger seat arrangement 100 may face one direction (e.g., inboard-facing in the forward direction) and some of the passenger seat assemblies 102 may face another direction (e.g., inboard-facing in the aft direction, outboard-facing in the forward direction, outboard-facing in the aft direction, etc.). The passenger seat assemblies 102 are arranged such that each passenger seat assembly 102 has direct access to the aisle 108.

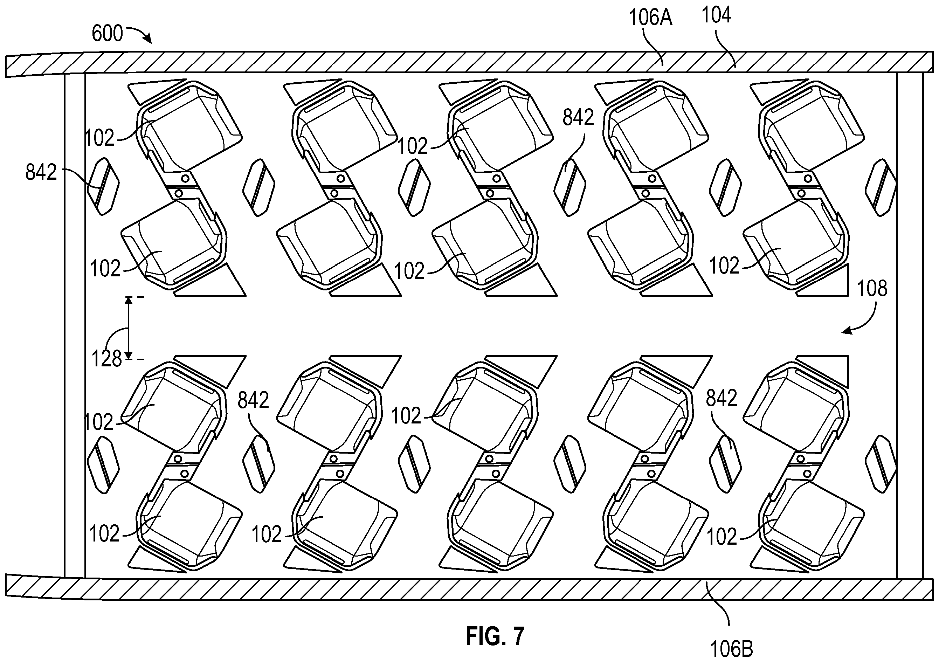

Each seat assembly 102 is movable between an upright position (see, e.g., FIG. 7) and a zero-gravity or neutral position (see, e.g., FIG. 7). In the zero-gravity or neutral position (also sometimes known as the perfect posture position or neutral body posture), the seat back and the seat base are positioned such that when a passenger is in the passenger seat, his or her head and knees are elevated above the stomach and/or lower back region. In the neutral position, the passenger's weight may be more evenly distributed throughout the chair and may reduce joint pressure, compression, strain, etc. on the passenger. As such, each seat assembly 102 is a non-lie flat seat because in both the upright position and the neutral position, the backrest 112 is at a non-zero angle relative to the corresponding base 110. The angle between the backrest 112 and the base 110 in the upright position is from about 90 degrees to about 100 degrees, such as from about 92 degrees to about 98 degrees, such as from about 96 degrees to about 94 degrees. In one non-limiting example, the angle between the backrest 112 and the base 110 in the upright position is about 96 degrees. The angle between the backrest 112 and the base 110 in the neutral position is from about 125 degrees to about 135 degrees, such as from about 127 degrees to about 131 degrees. In one non-limiting example, the angle between the backrest 112 and the base 110 in the neutral position is about 130 degrees. In some examples, a seat pan of the base 110 in the upright position is at about a 7 degree angle off the floor plane, and the angle increases to about 15 degrees in the neutral position. The seat assemblies 102 movable between the upright position and the neutral position allows for the seat arrangement 100 that both maximizes the number of seat assemblies 102 provided within the aircraft 104 and maintains the aisle 108 (i.e., the seat assemblies 102 do not obstruct the aisle 108 and/or reduce a width of the aisle 108). The width of the aisle 108 is maintained when adjacent seat assemblies 102 are in the upright positions and the neutral positions.

Various covers may cover cushioning and frame members forming the base 110 and backrest 112. Optionally, each seat assembly 102 may include a headrest 120, armrest, and/or various other components as desired, although it need not.

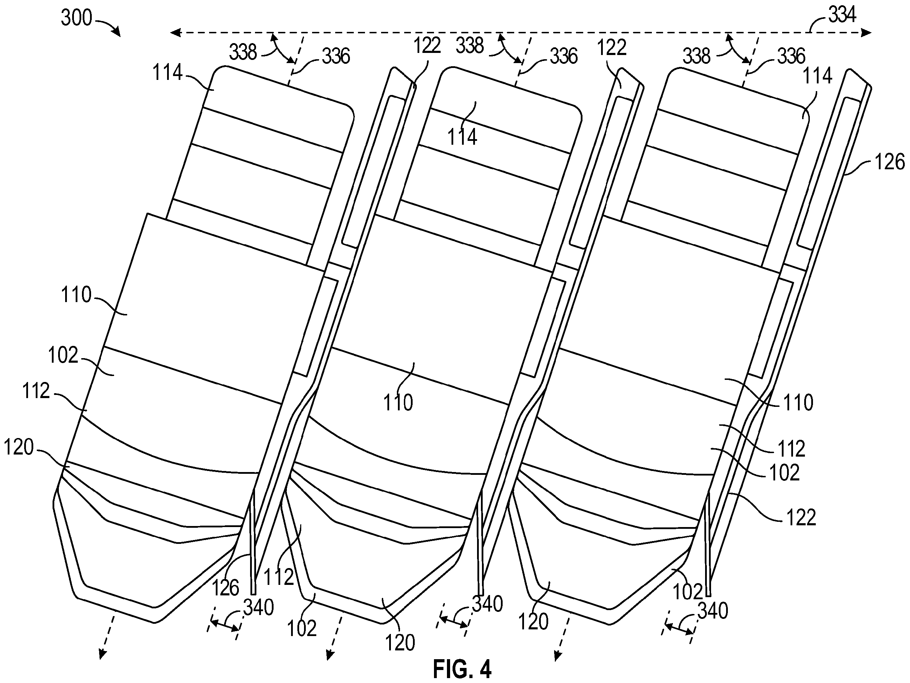

One or more privacy consoles 122 is provided with each passenger seat assembly 102. The privacy console 122 may include various equipment 124 and/or features including, but not limited to, In-Flight Entertainment (IFE) monitors, reading lights, aisle windows, cable stowage, cable charging, cup holders, storage pockets, universal holders, tray tables, shelves, and/or various other equipment as desired. In some examples, each console 122 includes a wall 126. In certain cases, the wall 126 has a height that may be less than a height of the seat assembly 102, greater than the height of the seat assembly 102, or substantially the same as the height of the seat assembly. In various examples, the wall 126 has a wall width that may be varied depending on components included with the console 122 and/or desired spacing between longitudinally adjacent seat assemblies 102. In some non-limiting examples, the width may be about 5 inches, about 3 inches, or about 1 inch. In other examples, the width may be greater than 5 inches, less than 1 inch, or various other widths between 1 inch and 5 inches. In some examples, the wall 126 may at least partially surround the seat assembly 102 (see, e.g., FIGs. 1-3), while in other examples, it need not (see, e.g., FIGs. 4-6). As such, the shape of the wall 126 (or console 122) should not be considered limiting on the current disclosure.

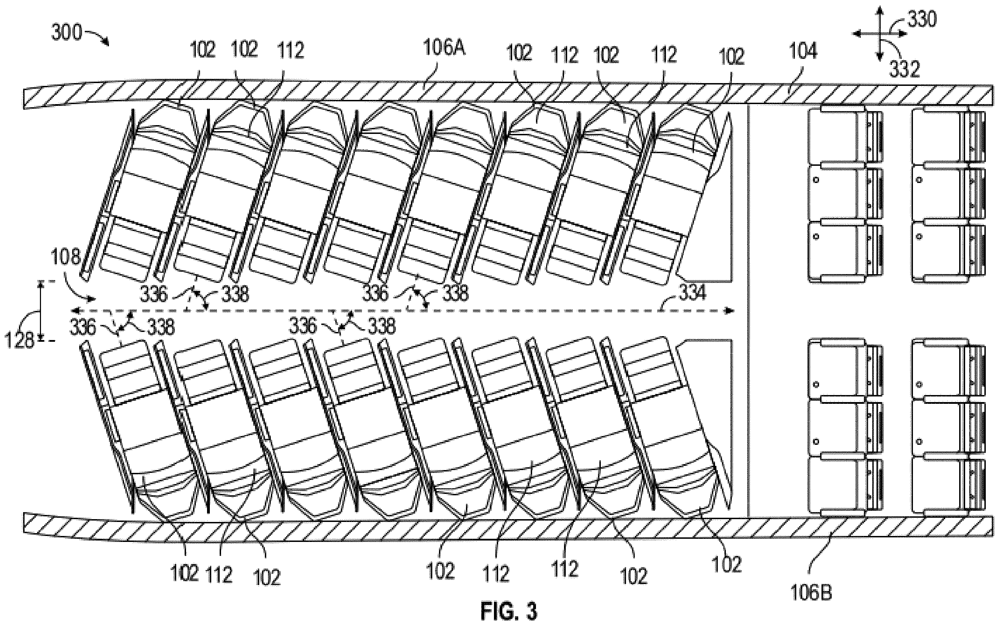

FIGs. 3 and 4 illustrate another example of a passenger seat arrangement 300. The passenger seat arrangement 300 is substantially similar to the passenger seat arrangement 100 except that the wall 126 of the privacy console 122 is only between longitudinally-adjacent passenger seat assemblies 102.

As illustrated in FIG. 3, the narrow-body aircraft 104 defines the longitudinal direction 330 extending forward (i.e., to the left side of FIG. 3) and aft (i.e., to the right side of FIG. 3) and a lateral direction 332 perpendicular to the longitudinal direction 330. The aisle 108 has a central aisle plane 334 extending in the longitudinal direction 330.

Each passenger seat assembly 102 defines a central seat plane 336 that bisects the base 110 and the backrest 112. The central seat plane 336 of each seat assembly 102 intersects the central aisle plane 334 at a non-zero and non-square acute angle 338. In some examples, the acute angle 338 is from greater than 0° to less than 90°, such as from about 10° to about 80°, such as from about 20° to about 70°, such as from about 30° to about 60°, such as 40° to about 50°. In one non-limiting example, the angle 338 is about 70°. In another non-limiting example, the angle 338 is about 40°.

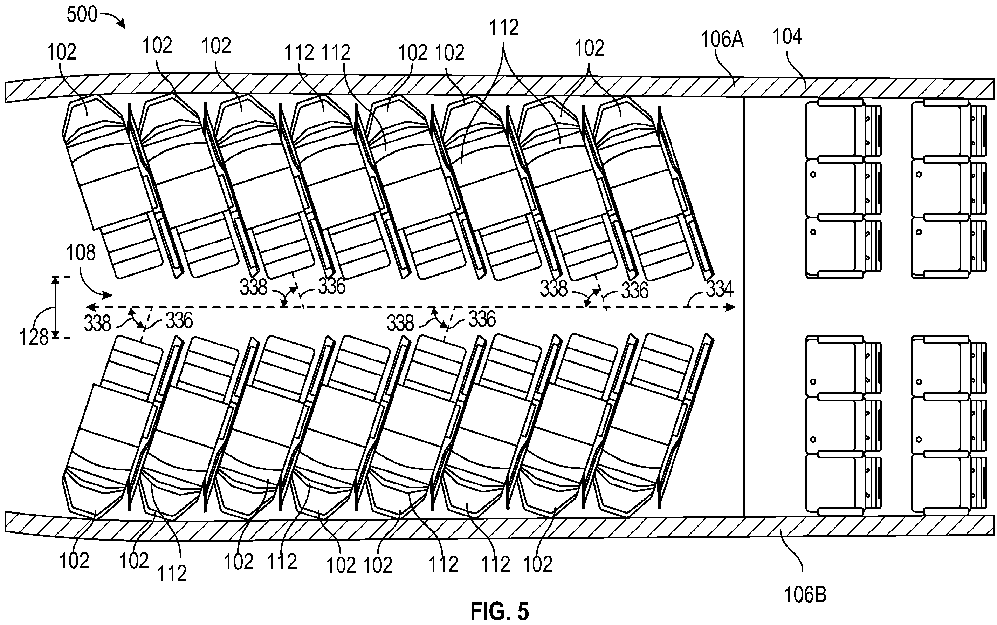

In certain examples, each passenger seat assembly 102 is at the angle 338 such that the passenger seat assembly 102 is either forward-facing (e.g., to the left in FIG. 3) (i.e., the forward side 116 of the backrest 112 is forward-facing and the aft side 118 of the backrest 112 is aft-facing) or aft-facing (e.g., to the right in FIG. 3) (i.e., the forward side 116 of the backrest 112 is aft-facing and the aft side 118 of the backrest 112 is aft-facing). In some examples, all of the passenger seat assemblies 102 of the passenger seat arrangement 100 are forward-facing or aft-facing (see, e.g., FIGs. 3 and 5). In other examples not falling within the scope of the claims, some of the passenger seat assemblies 102 are forward-facing and some of the passenger seat assemblies 102 are aft-facing (see, e.g., FIG. 7).

Each passenger seat assembly 102 is at the angle 338 such that the passenger seat assembly 102 is inboard-facing (i.e., the forward side 116 of the backrest 112 is facing the aisle 108) or, in examples not falling within the scope of the claims, may be outboard-facing (i.e., the forward side 116 of the backrest 112 is facing the adjacent wall 106A-B (or away from the aisle 108)). In some examples not falling within the scope of the claims, all of the passenger seat assemblies 102 of the passenger seat arrangement 100 are either inboard-facing or outboard-facing (see, e.g., FIGs. 3 and 5). In other examples not falling within the scope of the claims, some of the passenger seat assemblies 102 are inboard-facing and some of the passenger seat assemblies 102 are outboard-facing (see, e.g., FIG. 7). In FIGs. 3 and 4, all of the passenger seat assemblies 102 are inboard-facing and forward-facing.

In various examples, in a row of seat assemblies 102, the acute angle 338 between the central seat plane 336 and the central aisle plane 334 of one seat assembly 102 is a mirrored angle about the central aisle plane 334 of the acute angle 338 between the central seat plane 336 and the central aisle plane 334 of an adjacent seat assembly 102. In various examples, the seat arrangement 100 with the seat assemblies 102 at the acute angle 338 relative to the central aisle plane 334 and movable between the upright and neutral position allows for a maximum number of seat assemblies 102 with direct access to the aisle 108 while maintaining the aisle 108 on the narrow-body aircraft 104.

As illustrated in FIG. 4, each wall 126 of the privacy console 122 has a width 340. As described previously, the width may be varied depending on components included with the console 122 and/or desired spacing between longitudinally adjacent seat assemblies 102

FIG. 5 illustrates an example of a passenger seat arrangement 500. The passenger seat arrangement 500 is substantially similar to the passenger seat arrangement 300 of FIGs. 3 and 4 except that all of the passenger seat assemblies 102 are inboard-facing and aft-facing.

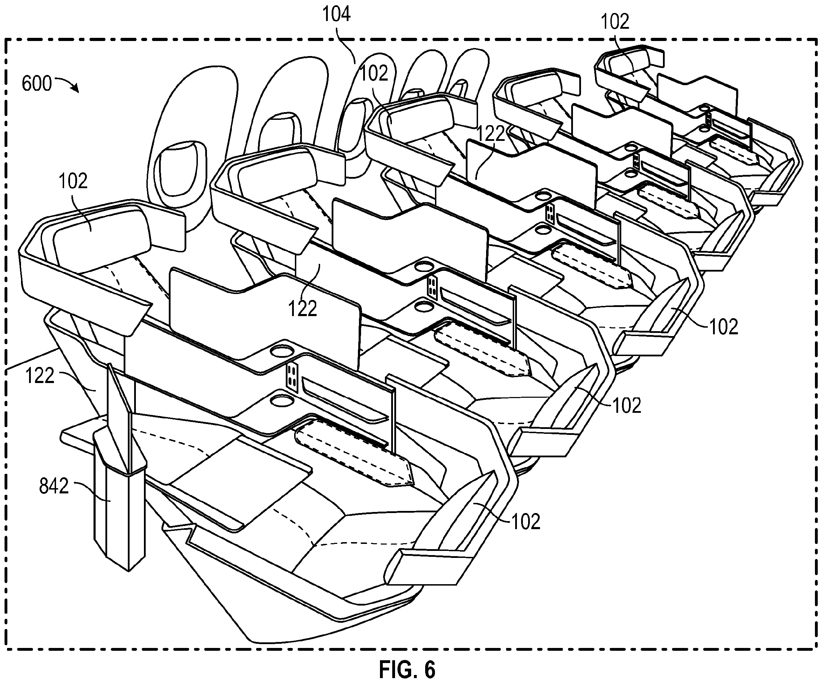

FIGs. 6-8 illustrate an example, not falling within the scope of the claims, of a passenger seat arrangement 600. The passenger seat arrangement 600 is substantially similar to the passenger seat arrangements 100, 300, and 500 except that some of the passenger seat assemblies 102 are inboard-facing and some of the passenger seat assemblies 102 are outboard-facing. In the present example, the inboard-facing seat assemblies 102 are aft-facing and the outboard-facing seat assemblies 102 are forward-facing. In other examples, some (or all) of the inboard-facing seat assemblies 102 may be forward facing and/or some (or all) of the outboard-facing seat assemblies 102 may be aft-facing.

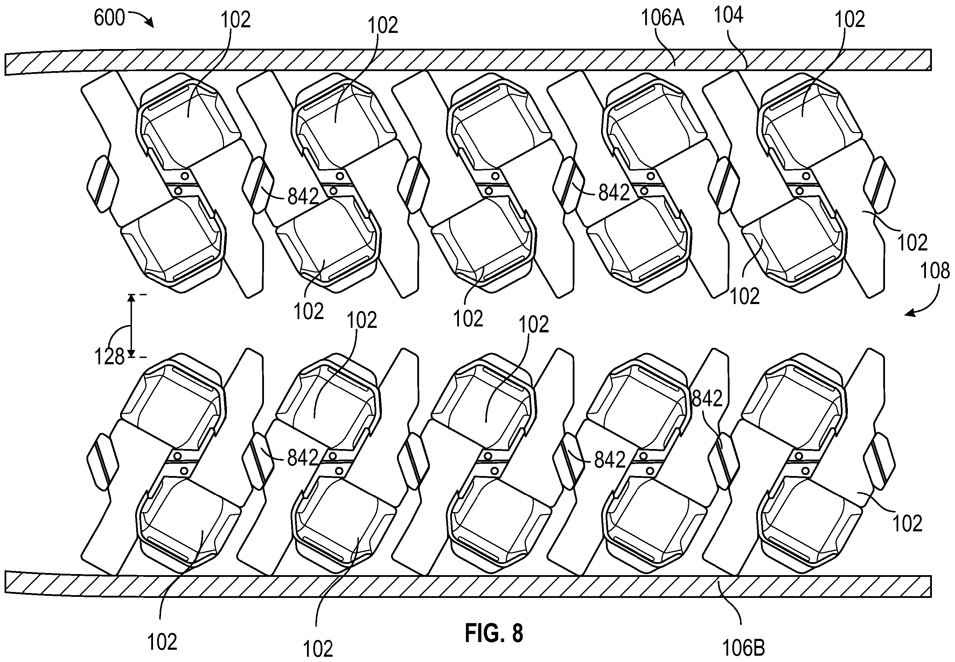

As illustrated in FIGs. 7 and 8, each seat assembly 102 is movable between an upright position (FIG. 7) and a neutral position (FIG. 8). As described previously, in both the upright position and the neutral position, the backrest 112 is at a non-zero angle relative to the base 110. In some examples, in the neutral position, the passenger seat assembly 102 elevates the passenger's legs compared to the upright position.

Compared to the passenger seat arrangement 100, 300, and 500, a single console 122 in the passenger seat arrangement 600 may be shared by longitudinally adjacent seat assemblies 102. In other examples, the passenger seat arrangements 100, 300, and/or 500 may include shared consoles 122. In some examples, the console 122 is shared between an inboard-facing seat assembly 102 and an outboard-facing seat assembly 102, although it need not be. Optionally, the passenger seat arrangement 600 includes a secondary privacy partition 842. In some cases, the secondary privacy partition 842 may be utilized between longitudinally-adjacent inboard-facing and outboard-facing seat assemblies 102 that do not share the same console 122.

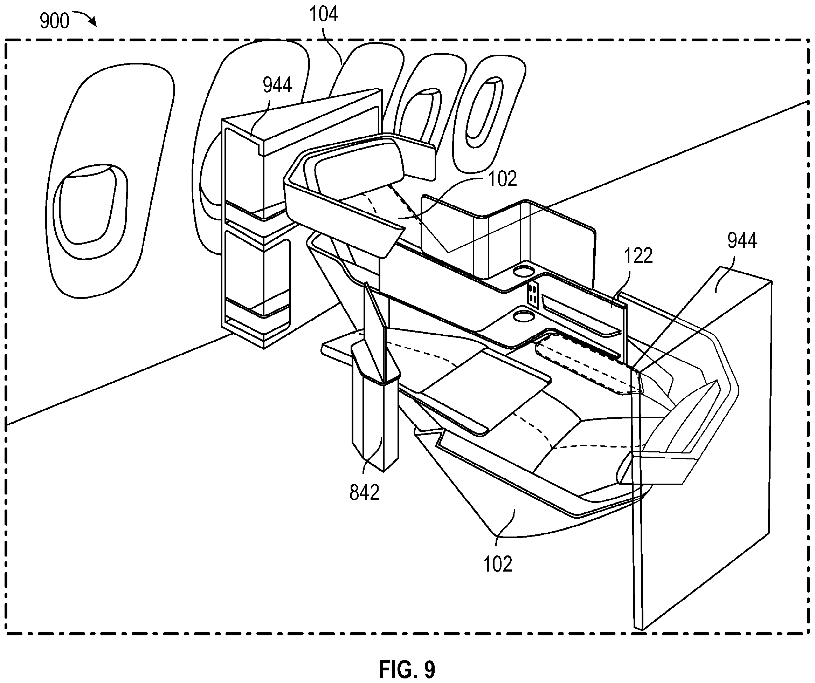

FIG. 9 illustrates an example, not falling within the scope of the claims, of two passenger seat assemblies 102 of a passenger seat arrangement 900. The passenger seat arrangement 900 is substantially similar to the passenger seat arrangement 600 except that additional stowage 944 is provided with each passenger seat assembly 102.

According to various examples, a method of installing the passenger seat arrangement 300 is provided. Although reference is made to the passenger seat arrangement 300, it will be understood that a similar method may be used to install any of the passenger seat arrangements 100, 500, 600, and/or 900.

The method includes positioning a first passenger seat assembly 102 and a second passenger seat assembly 102 in the narrow-body aircraft 104 and defining the aisle 108 between the first and second passenger seat assemblies 102. The method includes positioning the first passenger assembly 102 such that the central seat plane 336 of the first seat assembly 102 is at the non-square and non-zero acute angle 338 relative to the central aisle plane 334. The method includes positioning the second passenger seat assembly 102 such that the central seat plane 336 of the second seat assembly 102 is at a non-square and non-zero acute angle 338 relative to the central aisle plane 334. The passenger seat assemblies 102 are positioned such that each passenger seat assembly 102 has direct access to the aisle 108.

## Claims

1. A passenger seat arrangement (100) for a single-aisle aircraft (104) defining a longitudinal direction (330) extending forward and aft, said passenger seat arrangement (100) comprising:
a first passenger seat assembly (102) comprising a first privacy console (122) and a first passenger seat (102) comprising a first seat base (110), and a first seat back (112), the first passenger seat (102) defining a first seat plane (336) that bisects the first seat base (110) and the first seat back (112);
a second passenger seat assembly (102), adjacent to the first passenger seat assembly in a row, comprising a second privacy console (122) and a second passenger seat (102) comprising a second seat base (110), and a second seat back (112), the second passenger seat (102) defining a second seat plane (336) that bisects the second seat base (110) and the second seat back (112); and
an aisle (108) defined between the first passenger seat assembly (102) and the second passenger seat assembly (102) and comprising a central aisle plane (334) extending in the longitudinal direction, a width of the aisle (108) being a distance between the first passenger seat assembly (102) and the second passenger seat assembly (102) having direct access to the aisle (108),
wherein the first passenger seat (102) is a non-lie flat passenger seat movable between an upright position and a neutral position and wherein the first seat back (112) is at a non-zero angle relative to the first seat base (110) in both the upright position and the neutral position, and wherein, in the neutral position, the first passenger seat (102) is configured to support a passenger such that the passenger's head and knees are elevated above a lower back region of the passenger and such that the passenger's leg are elevated compared to the upright position;
wherein the second passenger seat (102) is a non-lie flat passenger seat movable between an upright position and a neutral position and wherein the second seat back (112) is at a non-zero angle relative to the second seat base (110) in both the upright position and the neutral position, and wherein, in the neutral position, the second passenger seat (102) is configured to support a passenger such that the passenger's head and knees are elevated above a lower back region of the passenger and such that the passenger's leg are elevated compared to the upright position,
wherein the first seat plane (336) is at a non-square and non-zero acute angle relative to the central aisle plane (334),
wherein the second seat plane (336) is at a non-square and non-zero acute angle relative to the central aisle plane (334) and
the passenger seats (102) movable between the upright position and the neutral position allow for the seat arrangement (100) that both maximizes the number of passenger seats (102) provided within the aircraft (104) and maintains the aisle (108) in such a way that the passenger seats (102) do not obstruct the aisle (108) and/or reduce the width of the aisle (108), the width of the aisle (108) being maintained when the adjacent first and second passenger seats (102) are in the upright positions and the neutral positions;
**characterized in that** an angle between the first seat back (112) and the first seat base (110) in the upright position is from 90 degrees to 100 degrees, and the angle between the first seat back (112) and the first seat base (110) in the neutral position is from 125 degrees to 135 degrees,
an angle between the second seat back (112) and second seat base (110) in the upright position is from 90 degrees to 100 degrees, and the angle between the second seat back (112) and the second seat base (110) in the neutral position is from 125 degrees to 135 degrees,
the first seat back (112) and the second seat back (112) are both inboard-facing and face the aisle (108).

2. The passenger seat arrangement of claim 1, **characterized in that** the first seat plane (336) and the second seat plane (336) are each at the non-square and non-zero acute angle in the aft direction such that a front side of the first seat back (112) is aft-facing and a front side of the second seat back (112) is aft-facing.

3. The passenger seat arrangement of claim 1, **characterized in that** the first seat plane (336) and the second seat plane (336) are each at the non-square and non-zero acute angle in the forward direction such that a front side of the first seat back (112) is forward-facing and a front side of the second seat back (112) is forward-facing.

4. The passenger seat arrangement of any of the claims 1 to 3, **characterized in that** it further comprises:
a third passenger seat (102) aft of the first passenger seat (102) and comprising a third seat base (110), a third seat back (112), and a third seat plane (336), wherein the third passenger seat (102) is a non-lie flat passenger seat movable between an upright position and a neutral position and wherein the third seat back (112) is at a non-zero angle relative to the third seat base (110) in both the upright position and the neutral position; and
a fourth passenger seat (102) aft of the second passenger seat (102) and comprising a fourth seat base (110), a fourth seat back (112), and a fourth seat plane (336), wherein the fourth passenger seat (102) is a non-lie flat passenger seat movable between an upright position and a neutral position and wherein the fourth seat back (112) is at a non-zero angle relative to the fourth seat base (110) in both the upright position and the neutral position,
wherein the aisle (108) is defined between the third passenger seat (102) and the fourth passenger seat (102),
wherein the third seat plane (336) is at a non-square and non-zero acute angle relative to the aisle plane (334),
wherein the fourth seat plane (336) is at a non-zero and non-zero acute angle relative to the aisle plane (334), and
wherein the first passenger seat, second passenger seat, third passenger seat, and fourth passenger seat each have direct access to the aisle (108).

5. A method of installing a passenger seat arrangement (100) according to any of the preceding claims in a single-aisle aircraft **characterized in that** it comprises:
providing the first passenger seat (102);
providing the second passenger seat (102);
defining the aisle (108) having the central aisle plane (334) extending in the longitudinal direction between the first passenger seat (102) and the second passenger seat (102);
positioning the first passenger seat (102) such that the first seat plane (336) is at a non-square and non-zero acute angle relative to the central aisle plane (334); and
positioning the second passenger seat (102) such that the second seat plane (336) is at a non-square and non-zero acute angle relative to the central aisle plane (334).
wherein positioning the first passenger seat (102) comprises providing direct aisle access to the first passenger seat (102), and wherein positioning the second passenger seat (102) comprises providing direct aisle access to the second passenger seat (102).

6. The method of claim 5, **characterized in that** positioning the first passenger seat (102) and the second passenger seat (102) comprises angling the first seat plane (336) and the second seat plane (336) at the non-square and non-zero acute angle in the aft direction such that a front surface of the first seat back (112) is aft-facing and a front surface of the second seat back (112) is aft-facing.

7. The method of claim 5, **characterized in that** positioning the first passenger seat (102) and the second passenger seat (102) comprises angling the first seat plane (336) and the second seat plane (336) at the non-square and non-zero acute angle in the forward direction such that a front surface of the first seat back (112) is forward-facing and a front surface of the second seat back (112) is forward-facing.

8. The method of any of the claims 5 to 7, **characterized in that** positioning the first passenger seat (102) and the second passenger seat (102) comprises angling the first passenger seat (102) and the second passenger seat (102) such that the angle between the first seat plane (336) and the aisle plane (334) is a mirrored angle of the angle between the second seat plane (336) and the aisle plane (334).

## Patentansprüche

1. Passagiersitzanordnung (100) für ein Monokorridorflugzeug (104), das eine Längsrichtung (330) definiert, die sich nach vorne und hinten erstreckt, wobei die Passagiersitzanordnung (100) umfasst:
eine erste Passagiersitzbaugruppe (102), die eine erste Privatsphärenkonsole (122) und einen ersten Passagiersitz (102) mit einer ersten Sitzbasis (110) und einer ersten Sitzlehne (112) umfasst, wobei der erste Passagiersitz (102) eine die erste Sitzbasis (110) und die erste Sitzlehne (112) halbierende erste Sitzebene (336) definiert;
eine zweite Passagiersitzbaugruppe (102), die in einer Reihe an die erste Passagiersitzbaugruppe angrenzend ist und eine zweite Privatsphärenkonsole (122) und einen zweiten Passagiersitz (102) mit einer zweiten Sitzbasis (110) und einer zweiten Sitzlehne (112) umfasst, wobei der zweite Passagiersitz (102) eine die zweite Sitzbasis (110) und die zweite Sitzlehne (112) halbierende zweite Sitzebene (336) definiert; und
einen Korridor (108), der zwischen der ersten Passagiersitzbaugruppe (102) und der zweiten Passagiersitzbaugruppe (102) definiert ist und eine zentrale Korridorebene (334) umfasst, die sich in Längsrichtung erstreckt, wobei eine Breite des Korridors (108) ein Abstand zwischen der ersten Passagiersitzbaugruppe (102) und der zweiten Passagiersitzbaugruppe (102) mit direktem Zugang zum Korridor (108) ist,
wobei der erste Passagiersitz (102) ist ein nicht-flachliegender Passagiersitz, der zwischen einer aufrechten Position und einer neutralen Position bewegt werden kann, und wobei die erste Sitzlehne (112) sowohl in der aufrechten Positionen als auch in der neutralen Position einen Null-ungleichen Winkel relativ zur ersten Sitzbasis (110) bildet, und wobei in der neutralen Position der erste Passagiersitz (102) dazu ausgebildet ist, einen Passagier so zu stützen, dass der Kopf und die Knie des Passagiers über einen unteren Rückenbereich des Passagiers angehoben sind und die Beine des Passagiers relativ zur aufrechten Position angehoben werden;
wobei der zweite Passagiersitz (102) ein nicht-flachliegender Passagiersitz ist, der zwischen einer aufrechten Position und einer neutralen Position bewegt werden kann, und wobei die zweite Sitzlehne (112) sowohl in der aufrechten Position als auch in der neutralen Position einen Null-ungleichen Winkel relativ zur zweiten Sitzbasis (110) bildet, und wobei in der neutralen Position der zweite Passagiersitz (102) dazu ausgebildet ist, einen Passagier so zu stützen, dass der Kopf und die Knie des Passagiers über einen unteren Rückenbereich des Passagiers angehoben sind und die Beine des Passagiers relativ zur aufrechten Position angehoben werden,
wobei die erste Sitzebene (336) einen unrechten und Null-ungleichen spitzen Winkel relativ zur zentralen Korridorebene (334) bildet,
wobei die zweite Sitzebene (336) einen unrechten und Null-ungleichen spitzen Winkel relativ zur zentralen Korridorebene (334) bildet und
die Passagiersitze (102), die zwischen der aufrechten Position und der neutralen Position beweglich sind, die Sitzanordnung (100) ermöglichen, welche sowohl die Anzahl der im Flugzeug (104) bereitgestellten Passagiersitze (102) maximiert, als auch der Korridor (108) so erhält, dass die Passagiersitze (102) den Korridor (108) nicht behindern und/oder die Breite des Korridors (108) nicht verringern, wobei die Breite des Korridors (108) erhalten wird, wenn sich der erste und der zweite Passagiersitz (102), die benachbarten sind, in der aufrechten Position und der neutralen Position befinden;
**dadurch gekennzeichnet, dass**
ein Winkel zwischen der ersten Sitzlehne (112) und der ersten Sitzbasis (110) in der aufrechten Position im Bereich von 90 Grad bis 100 Grad liegt und der Winkel zwischen der ersten Sitzlehne (112) und der erste Sitzbasis (110) in der neutralen Position im Bereich von 125 Grad bis 135 Grad liegt,
ein Winkel zwischen der zweiten Sitzlehne (112) und der zweiten Sitzbasis (110) in der aufrechten Position im Bereich von 90 Grad bis 100 Grad liegt, und der Winkel zwischen der zweiten Sitzlehne (112) und der zweiten Sitzbasis (110) in der neutralen Position im Bereich von 125 Grad bis 135 Grad liegt,
sowohl die erste Sitzlehne (112) als auch die zweite Sitzlehne (112) dem Flugzeuginnere und dem Korridor (108) zuwenden.

2. Passagiersitzanordnung nach Anspruch 1, **dadurch gekennzeichnet, dass** sowohl die erste Sitzebene (336) als auch die zweite Sitzebene (336) den unrechten und Null-ungleichen spitzen Winkel in Rückwärtsrichtung bilden, sodass eine Vorderseite der ersten Sitzlehne (112) nach hinten zeigt und eine Vorderseite der zweiten Sitzlehne (112) nach hinten zeigt.

3. Passagiersitzanordnung nach Anspruch 1, **dadurch gekennzeichnet, dass** sowohl die erste Sitzebene (336) als auch die zweite Sitzebene (336) den unrechten und Null-ungleichen spitzen Winkel in Vorwärtsrichtung bilden, sodass eine Vorderseite der erste Sitzlehne (112) nach vorne zeigt und eine Vorderseite der zweiten Sitzlehne (112) nach vorne zeigt.

4. Passagiersitzanordnung nach einem der Ansprüche 1 bis 3, **dadurch gekennzeichnet, dass** sie weiterhin umfasst:
einen dritten Passagiersitz (102), der sich hinter dem ersten Passagiersitz (102) befindet und eine dritte Sitzbasis (110), eine dritte Sitzlehne (112) und eine dritte Sitzebene (336) umfasst, wobei der dritte Passagiersitz (102) ein nicht-flachliegender Passagiersitz ist, der zwischen einer aufrechten Position und einer neutralen Position bewegbar ist und wobei die dritte Sitzlehne (112) einen Null-ungleichen Winkel relativ zur dritten Sitzbasis (110) sowohl in der aufrechten Position als auch in der neutralen Position bildet; und
einen vierten Passagiersitz (102), der sich hinter dem zweiten Passagiersitz (102) befindet und eine vierte Sitzbasis (110), eine vierte Sitzlehne (112) und eine vierte Sitzebene (336) umfasst, wobei der vierte Passagiersitz (102) ein nicht-flachliegender Passagiersitz ist, der zwischen einer aufrechten Position und einer neutralen Position bewegbar ist, und wobei die vierte Sitzlehne (112) einen Null-ungleichen Winkel relativ zur vierten Sitzbasis (110) sowohl in der aufrechten Position als auch in der neutralen Position bildet,
wobei der Korridor (108) zwischen dem dritten Passagiersitz (102) und dem vierten Passagiersitz (102) definiert ist,
wobei die dritte Sitzebene (336) einen unrechten und Null-ungleichen spitzen Winkel relativ zur Korridorebene (334) bildet,
wobei die vierte Sitzebene (336) einen unrechten und Null-ungleich spitzen Winkel relativ zur Korridorebene (334) bildet, und
wobei der erste Passagiersitz, der zweite Passagiersitz, der dritte Passagiersitz und der vierte Passagiersitz jeweils direkten Zugang zum Korridor (108) haben.

5. Verfahren zum Einbau einer Passagiersitzanordnung (100) nach einem der vorhergehenden Ansprüche in ein Monokorridorflugzeug, **dadurch gekennzeichnet, dass** es umfasst:
Bereitstellen des ersten Passagiersitzes (102);
Bereitstellen des zweiten Passagiersitzes (102);
Definieren des Korridors (108), dessen mittlere Korridorebene (334) sich in Längsrichtung zwischen dem ersten Passagiersitz (102) und dem zweiten Passagiersitz (102) erstreckt;
Positionieren des ersten Passagiersitzes (102) so, dass die erste Sitzebene (336) einen unrechten und Null-ungleichen spitzen Winkel relativ zur mittleren Korridorebene (334) bildet; und
Positionieren des zweiten Passagiersitz (102) so, dass die zweite Sitzebene (336) einen unrechten und Null-ungleichen spitzen Winkel relativ zur mittleren Korridorebene (334) bildet,
wobei Positionieren des ersten Passagiersitzes (102) Bereitstellen eines direkten Korridorzugangs zum ersten Passagiersitz (102) umfasst, und
wobei Positionieren des zweiten Passagiersitzes (102) Bereitstellen eines direkten Korridorzugangs zum ersten Passagiersitz (102) und zum zweiten Passagiersitz (102) umfasst.

6. Verfahren nach Anspruch 5, **dadurch gekennzeichnet, dass** Positionieren des ersten Passagiersitzes (102) und des zweiten Passagiersitzes (102) Neigen der ersten Sitzebene (336) und der zweiten Sitzebene (336) um den unrechten und Null-ungleichen spitzen Winkel in Rückwärtsrichtung umfasst, so dass eine Vorderfläche der ersten Sitzlehne (112) nach hinten zeigt und eine Vorderfläche der zweiten Sitzlehne (112) nach hinten zeigt.

7. Verfahren nach Anspruch 5, **dadurch gekennzeichnet, dass** Positionieren des ersten Passagiersitzes (102) und des zweiten Passagiersitzes (102) Neigen der ersten Sitzebene (336) und der zweiten Sitzebene (336) um einen unrechten und Null-ungleichen spitzen Winkel in der Vorwärtsrichtung umfasst, so dass eine Vorderfläche der ersten Sitzlehne (112) nach vorne zeigt und eine Vorderfläche der zweiten Sitzlehne (112) nach vorne zeigt.

8. Verfahren nach einem der Ansprüche 5 bis 7, **dadurch gekennzeichnet, dass** Positionieren des ersten Passagiersitzes (102) und des zweiten Passagiersitzes (102) Neigen des ersten Passagiersitzes (102) und des zweiten Passagiers (102) umfasst, so dass der Winkel zwischen der ersten Sitzebene (336) und der Korridorebene (334) ein Winkel ist, der ein Spiegelwinkel zwischen der zweiten Sitzebene (336) und der Korridorebene (334) ist.

## Revendications

1. Agencement de sièges de passager (100) destiné à un aéronef monocouloir (104) définissant une direction longitudinale (330) s'étendant vers l'avant et vers l'arrière, ledit agencement de sièges de passager (100) comprenant :
un premier ensemble formant siège de passager (102) qui comprend une première console d'intimité (122) et un premier siège de passager (102) qui comprend une première base de siège (110) et un premier dossier de siège (112), le premier siège de passager (102) définissant un premier plan de siège (336) qui coupe en deux la première base de siège (110) et le premier dossier de siège (112) ;
un deuxième ensemble formant siège de passager (102), adjacent au premier ensemble formant siège de passager dans une rangée, qui comprend une deuxième console d'intimité (122) et un deuxième siège de passager (102) qui comprend une deuxième base de siège (110) et un deuxième dossier de siège (112), le deuxième siège de passager (102) définissant un deuxième plan de siège (336) qui coupe en deux la deuxième base de siège (110) et le deuxième dossier de siège (112) ; et
un couloir (108) qui est défini entre le premier ensemble format siège de passager (102) et le deuxième ensemble formant siège de passager (102) et qui comprend un plan de couloir central (334) qui s'étend dans la direction longitudinale, une largeur du couloir (108) étant une distance entre le premier ensemble formant siège de passager (102) et le deuxième ensemble formant siège de passager (102) ayant un accès direct au couloir (108),
le premier siège de passager (102) étant un siège de passager non couché à plat mobile entre une position relevée et une position neutre et le premier dossier de siège (112) formant un angle non nul par rapport à la première base de siège (110) aussi bien dans la position relevée que dans la position neutre et, dans la position neutre, le premier siège de passager (102) étant conçu pour supporter un passager de telle sorte que la tête et les genoux du passager soient surélevés au-dessus d'une région dorsale inférieure du passager et de telle sorte que les jambes du passager soient surélevées par rapport à la position relevée ;
le deuxième siège de passager (102) est un siège de passager non couché à plat mobile entre une position relevée et une position neutre et le deuxième dossier de siège (112) formant un angle non nul par rapport à la deuxième base de siège (110) aussi bien dans la position relevée que dans la position neutre et, dans la position neutre, le deuxième siège de passager (102) étant conçu pour supporter un passager de telle sorte que la tête et les genoux du passager soient surélevés au-dessus d'une région dorsale inférieure du passager et de telle sorte que les jambes du passager soient surélevées par rapport à la position relevée,
le premier plan de siège (336) formant un angle aigu non droit et non nul par rapport au plan de couloir central (334),
le deuxième plan de siège (336) formant un angle aigu non droit et non nul par rapport au plan de couloir central (334) et
les sièges de passager (102) mobiles entre la position relevée et la position neutre permettant l'agencement de siège (100) qui maximise le nombre de sièges de passager (102) prévus dans l'aéronef (104) et maintient le couloir (108) de telle manière que les sièges de passager (102) n'obstruent pas le couloir (108) et/ou ne réduisent pas la largeur du couloir (108), la largeur du couloir (108) étant maintenue lorsque les premier et deuxième sièges de passager (102) qui sont adjacents sont dans les positions verticales et les positions neutres ;
**caractérisé en ce que**
un angle formé entre le premier dossier de siège (112) et la première base de siège (110) dans la position relevée est dans la gamme allant de 90 degrés à 100 degrés, et l'angle entre le premier dossier de siège (112) et la première base de siège (110) dans la position neutre est dans la gamme allant de 125 degrés à 135 degrés,
un angle formé entre le deuxième dossier de siège (112) et la deuxième base de siège (110) dans la position relevée est dans la gamme allant de 90 degrés à 100 degrés, et l'angle formé entre le deuxième dossier de siège (112) et la deuxième base de siège (110) dans la position neutre est dans la gamme allant de 125 degrés à 135 degrés,
le premier dossier de siège (112) et le deuxième dossier de siège (112) sont tous deux dirigés vers l'intérieur de l'avion et vers le couloir (108).

2. Agencement de sièges de passager selon la revendication 1, **caractérisé en ce que** aussi bien le premier plan de siège (336) que le deuxième plan de siège (336) forment un angle aigu non droit et non nul dans la direction arrière de telle sorte qu'un côté avant du premier dossier de siège (112) soit dirigé vers l'arrière et qu'un côté avant du deuxième dossier de siège (112) soit dirigé vers l'arrière.

3. Agencement de sièges de passager selon la revendication 1, **caractérisé en ce que** aussi bien le premier plan de siège (336) que le deuxième plan de siège (336) forment un angle aigu non droit et non nul dans la direction vers l'avant de telle sorte qu'un côté avant du premier dossier de siège (112) soit dirigé vers l'avant et qu'un côté avant du deuxième dossier de siège (112) soit dirigé vers l'avant.

4. Agencement de sièges de passager selon l'une quelconque des revendications 1 à 3, **caractérisé en ce qu'**il comprend en outre :
un troisième siège de passager (102) qui est situé à l'arrière du premier siège de passager (102) et qui comprend une troisième base de siège (110), un troisième dossier de siège (112) et un troisième plan de siège (336), le troisième siège de passager (102) étant un siège de passager non couché à plat mobile entre une position relevée et une position neutre et le troisième dossier de siège (112) formant un angle non nul par rapport à la troisième base de siège (110) aussi bien dans la position relevée que dans la position neutre ; et
un quatrième siège de passager (102) qui est situé à l'arrière du deuxième siège de passager (102) et qui comprend une quatrième base de siège (110), un quatrième dossier de siège (112) et un quatrième plan de siège (336), le quatrième siège de passager (102) étant un siège de passager non couché à plat mobile entre une position relevée et une position neutre et le quatrième dossier de siège (112) formant un angle non nul par rapport à la quatrième base de siège (110) aussi bien dans la position relevée et dans la position neutre,
le couloir (108) étant défini entre le troisième siège de passager (102) et le quatrième siège de passager (102),
le troisième plan de siège (336) formant un angle aigu non droit et non nul par rapport au plan de couloir (334),
le quatrième plan de siège (336) formant un angle aigu non droit et non nul par rapport au plan de couloir (334), et
le premier siège de passager, le deuxième siège de passager, le troisième siège de passager et le quatrième siège de passager ayant chacun un accès direct au couloir (108).

5. Procédé d'installation d'un agencement de sièges de passager (100) selon l'une quelconque des revendications précédentes dans un avion monocouloir, **caractérisé en ce qu'**il comprend les étapes suivantes :
fournir le premier siège de passager (102) ;
fournir le deuxième siège de passager (102) ;
définir le couloir (108) dont le plan de couloir central (334) s'étend dans la direction longitudinale entre le premier siège de passager (102) et le deuxième siège de passager (102) ;
positionner le premier siège de passager (102) de telle sorte que le premier plan de siège (336) forme un angle aigu non droit et non nul par rapport au plan de couloir central (334) ; et
positionner le deuxième siège de passager (102) de telle sorte que le deuxième plan de siège (336) forme un angle aigu non droit et non nul par rapport au plan de couloir central (334),
le positionnement du premier siège de passager (102) comprenant la fourniture d'un accès direct du couloir au premier siège de passager (102) et le positionnement du deuxième siège de passager (102) comprenant la fourniture d'un accès direct du couloir au deuxième siège de passager (102).

6. Procédé selon la revendication 5, **caractérisé en ce que** le positionnement du premier siège de passager (102) et du deuxième siège de passager (102) comprend l'inclinaison du premier plan de siège (336) et du deuxième plan de siège (336) suivant un angle aigu non droit et non nul dans la direction arrière de telle sorte qu'une surface avant du premier dossier de siège (112) soit dirigée vers l'arrière et qu'une surface avant du deuxième dossier de siège (112) soit dirigée vers l'arrière.

7. Procédé selon la revendication 5, **caractérisé en ce que** le positionnement du premier siège de passager (102) et du deuxième siège de passager (102) comprend l'inclinaison du premier plan de siège (336) et du deuxième plan de siège (336) suivant un angle aigu non droit et non nul dans la direction vers l'avant de telle sorte qu'une surface avant du premier dossier de siège (112) soit dirigée vers l'avant et qu'une surface avant du deuxième dossier de siège (112) soit dirigée vers l'avant.

8. Procédé selon l'une quelconque des revendications 5 à 7, **caractérisé en ce que** le positionnement du premier siège de passager (102) et du deuxième siège de passager (102) comprend l'inclinaison du premier siège de passager (102) et du deuxième siège de passager (102) de telle sorte que l'angle formé entre le premier plan de siège (336) et le plan de couloir (334) soit un angle en miroir de l'angle formé entre le deuxième plan de siège (336) et le plan de couloir (334) .
